# EUROPEAN PATENT APPLICATION

(11) **EP 2 741 452 A1**
(43) Date of publication of application: **11.06.2014**
(21) Application number: 12196331.8
(22) Date of filing: 10.12.2012
(51) Int. Cl.: H04L 12/40

(54) **Method for data transmission among ECUs and/or measuring devices**

(71) Applicant: ROBERT BOSCH GMBH, 70442 Stuttgart (DE)
(72) Inventor: Roettger, Kai, 70376 Stuttgart (DE); Leuwer, Herbert, 71522 Backnang (DE); Brune, Andreas, 71522 Backnang (DE); Wollenhaupt, Thomas, 71522 Backnang (DE); Bayer, Thomas, 72622 Nuertingen (DE)

(57) **Abstract**

The invention refers to a method for data transmission among electronic control units, referred to hereinafter as ECUs, and/or measuring devices in the realm of motor vehicles. In order to provide a method for data transmission enabling an accelerated data transmission, in particular fast (low) event cycle times, a low jitter and a high data throughput, it is suggested that the architecture of the data transmission is split up into a control plane implemented in software operating on configuration, calibration and/or diagnostics, referred to hereinafter as CD, data and a data plane implemented in hardware transporting measurement, referred to hereinafter as M, data and/or prototyping, referred to hereinafter as RP, data.

## Description

### Prior Art

The present invention refers to a method for data transmission among electronic control units, referred to hereinafter as ECUs, and/or measuring devices in the realm of motor vehicles. Furthermore, the invention refers to an ECU interface module, an ECU and a measuring device.

The number of electronic control units and in particular of engine control units (ECUs) in motor vehicles and their internetworking increase continuously. For example, new powertrain technologies lead to faster control loops and Ethernet is starting to complement or even replace traditional interconnect technologies in cars like CAN, FlexRay, LIN and MOST.

These developments result in rapidly increasing data throughput and more challenging real-time requirements for ECUs and embedded ECU interface modules.

The next generation of ECU interface devices will therefore step from Fast Ethernet to Gigabit Ethernet within the distributed measurement, calibration and diagnostics (MCD) systems. Embedded rapid prototyping (RP) systems will utilize PCI Express technology to meet the demanding latency and jitter requirements.

The traditional way of software based quality of service (QoS) and protocol processing is not able to handle the large variety of protocols across multiple layers at the requested performance.

Traditional automotive protocol standards and the corresponding reference diagram known from the prior art are based on a software driven client-server pattern. A client running on a powerful standard personal computer hosting a MCD application software or prototyping software acts as an intelligent protocol master and a server in the embedded ECU interface module acts as a command executing protocol slave.

In the known automotive protocol standards only the link layer in the server is implemented using standard controller hardware (CAN controller, Flexray controller, Ethernet media access controller or similar controllers). Higher protocol layers like network layer, transport layer and automotive protocol service layers are all implemented in software running on top of a real-time operating system with some limited standard hardware support like Direct Memory Access (DMA).

Implementing multiple protocol layer stacks on top of different link layers within a very restricted set of central processing units (CPU) requires the serialization of the processing associated with asynchronously incoming data events (frames) using the services and software threading methods provided by the underlying operating system.

However, the serialization and the context switching overhead associated with software threading restrict the maximum event rate. This event rate restriction appears to be the main bottleneck for all software based real time systems. It results in an increased IO latency and jitter for prototyping application, increased round trip times for transactions and a restricted measurement throughput because of the resulting network frame rate limitations. Performance optimization in the software based real time systems is difficult if not even impossible to achieve, because throttling of event rates for reducing the context switching overhead corrupts prototyping's and control planes' low latency requirements. Using multicore CPU technology for increasing software processing power corrupts the ECU interface modules power consumption requirements and cannot efficiently accelerate a single high bitrate data conversation (e.g. single Transmission Connect Protocol (TCP) connection) since the conversation's packet ordering forbids parallel processing of its packets.

### Disclosure of the Invention

Therefore, it is an object of the present invention to provide a method for data transmission of the above-identified kind, enabling an accelerated data transmission, in particular fast (low) event cycle times, a low jitter and a high data throughput.

This object is solved by the method for data transmission of the above-identified kind, wherein the architecture of the data transmission is split up into a control plane implemented in software operating on configuration, calibration and/or diagnostics (CD) data and a data plane implemented in hardware transporting measurement (M) data and/or prototyping (RP) data.

The present invention suggests a component, which implements a new paradigm for a hardware based multilayer protocol processing and hardware based QoS in embedded ECU interface modules. This new architectural approach provides at least a tenfold performance increase compared to the current technology.

The invention suggests a new technology, which uses a new architectural view. According to the multi-service properties of automotive protocols, the architecture is split into a control plane implemented in software operating on configuration, calibration and diagnostics (CD) data, preferably transported using transactions (T), and a data plane implemented in hardware transporting measurement (M) and prototyping (RP) data, preferably transported using stateless data streams (S).

The implementation of the data plane in hardware has several major advantages in respect of the prior art, which comprise:
● optimized data plane for very fast event processing with event cycle times down to 360 ns, in some cases even down to 200 ns (prior art software approach: > 50 µs).
● optimized data plane for very low jitter of less than 2 µs (prior art software approach: tens of µs).
● optimized data plane for high data throughput of up to 2.8 Gbit/s, in some cases even up to 5.0 Gbit/s (prior art software approach: < 100 Mbit/s).

An especially effective optimization can be achieved, for example, by an ASIC development instead of an FPGA development.

According to the present invention the following terms have the subsequently defined meaning:
Receive = reception of data from external line,
Transmit = transmission on external line
Forward = forward data from a device to a data processor core and further to a device.
Hence, the sequence is always: Receive => Forward => Transmit

According to a preferred embodiment, the data to be forwarded or the data stream, respectively, is segmented into multiple data segments on the receiving device's side before data forwarding. Furthermore, it is possible that the data segments are interleaved before data forwarding. Finally, it is advantageous if the data segments of various receiving devices are multiplexed before data forwarding. The multiplexing can be effected alternatively or additionally to the interleaving before or after the interleaving process. Then the data segments are forwarded sequentially. If more than one device wants to forward data, according to the result of the interleaving and/or multiplexing process, data forwarding is switched between data segments from a first device and data segments from another device. After forwarding of the data segments the transmitting device collects the data segments into data units of the outgoing device's interface or line. Hence, microscopically seen (< 1 µs) the data or the data segments, respectively, are forwarded sequentially. However, macroscopically seen (> 10 µs) the data forwarding is effected in parallel (or quasi-parallel, respectively), because the switching of the data forwarding between the data segments from the first device and the data segments from the other device is performed very fast. This is only possible because the data plane is implemented in hardware, which allows fast context switching. Context switching comprises storing and restoring the state (context) of a processing unit so that execution can be resumed from the same point at a later time. This enables multiple processes to share a single processing. The context switch is an essential feature of a multitasking operating system.

In contrast thereto, in the prior art software architecture the switching of the data forwarding between the data segments from the first device and the data segments from the other device is performed much slower. This is due to the fact that the switching in the software architecture comprises a plurality of steps of saving registers, storing the current context, freeing the CPU for a new context, etc. The context switching takes much longer if realized in software than it takes when realized in hardware. One reason for this is that a software based context switching consumes a lot of time for each software interrupt.

The functioning of the hardware based data plane implementation according to the invention and the ECU interface module, respectively, can be compared to a co-processor for accelerating data transmission among ECUs and/or measuring devices. A conventional co-processor supports a CPU in processing data. A difference of the present invention in respect to a conventional co-processor is the fact that all data, which is to be processed by the co-processor, first passes through the processing unit before it is processed in the co-processor. This is different in the hardware based data plane implementation according to the invention and the ECU interface module, respectively. According to the invention, all data to be transmitted passes through the hardware based data plane implementation and the ECU interface module, respectively. By this the ECUs and their CPUs, respectively, are significantly relieved from handling and processing data for the sake of data forwarding.

Preferably, the data plane switches the commands and responses of transactions and/or the streams to and from the ECUs and/or the measuring devices. However, it is noted that - in contrast to, for example, PCI Express switches - the switching of the data plane is not transaction aware. In PCI Express switches the switching unit remembers the commands' path and uses this knowledge for the responses along the reverse direction. According to the present invention both paths must be configured beforehand.

The present invention is preferably used in the realm of motor vehicles. It can be realized as an ECU interface module located between a first ECU and a second ECU or a measuring device connected to the first ECU. Furthermore, it could be realized in a measuring device, which can be connected to one or more ECUs of a motor vehicle in order to monitor and/or control their operation and functioning. Furthermore, the invention could be realized in a gateway control unit of an ECU. With other words, the invention could also be implemented in the ECU itself.

Further features and advantages of the present invention are explained in detail hereinafter with reference to a preferred embodiment of the invention and the figures. It is appreciated that the present invention does not necessarily have to comprise all of the features described below with reference to the preferred embodiment but may just as well have only some of the mentioned features alone or in any combination with selected other features. The figures show:
- Figure 1: a client-server implementation view of an MCD and prototyping system known in the prior art,
- Figure 2: a control and data plane implementation view of an MCD and prototyping system according to a preferred embodiment of the present invention,
- Figure 3: a control and data plane implementation view of an MCD and prototyping system according to another preferred embodiment of the present invention,
- Figure 4: a data plane (= data processor) pipeline architecture of the implementation according to the present invention,
- Figure 5: a data processor information model of the implementation according to the present invention,
- Figure 6: an uplink XCP on TCP Architecture of the implementation according to the present invention, and
- Figure 7: an uplink XCP on TCP (high throughput) and an uplink prototyping RTIO (low latency) of the implementation according to the present invention.

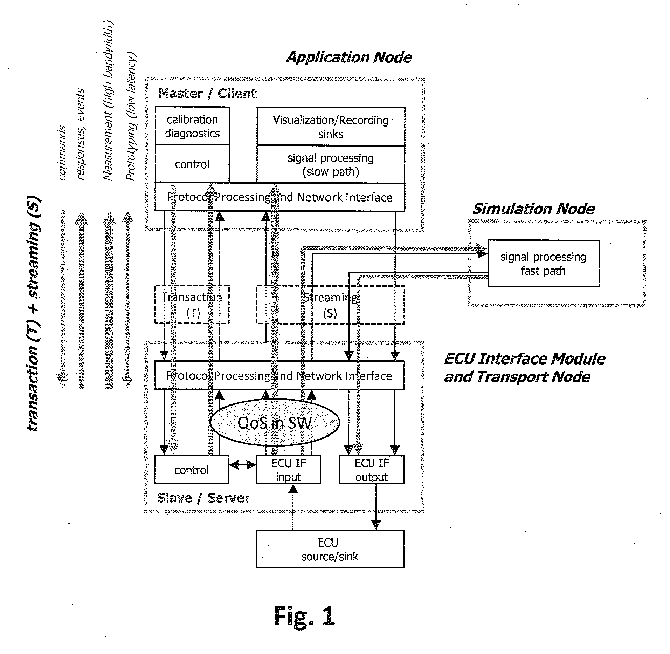

Automotive protocol standards and the corresponding reference diagrams known from the prior art are based on a software driven client-server pattern, an example of which is shown in figure 1. A client running, for example, on a powerful standard personal computer hosting a measurement, calibration and diagnostics (MCD) application software or prototyping software acts as an intelligent protocol master and a server in the embedded ECU interface module acts as a command executing protocol slave.

Only the link layer in the server is implemented using standard controller hardware (CAN controller, Flexray controller, Ethernet media access controller or similar controllers). Higher protocol layers like network layer, transport layer and automotive protocol service layers are all implemented in software running on top of a real-time operating system with some standard hardware support like Direct Memory Access (DMA).

Implementing multiple protocol layer stacks on top of different link layers within a very restricted set of central processing units (CPU) requires the serialization of the processing associated with asynchronously incoming data events (frames) using the services and software threading methods provided by the underlying operating system.

However, the serialization and the context switching overhead associated with software threading restrict the maximum event rate. This event rate restriction appears to be the main bottleneck for all software based real time systems. It results in an increased IO latency and jitter for prototyping application, increased round trip times for transactions and a restricted measurement throughput because of the resulting network frame rate limitations. Performance optimization is difficult if not even impossible to achieve, because throttling of event rates for reducing the context switching overhead corrupts prototyping's and control planes' low latency requirements. Using multicore CPU technology for increasing software processing power corrupts the ECU interface modules power consumption requirements and cannot efficiently accelerate a single high bitrate data conversation (e.g. single TCP connection) since the conversation's packet ordering forbids parallel processing of its packets.

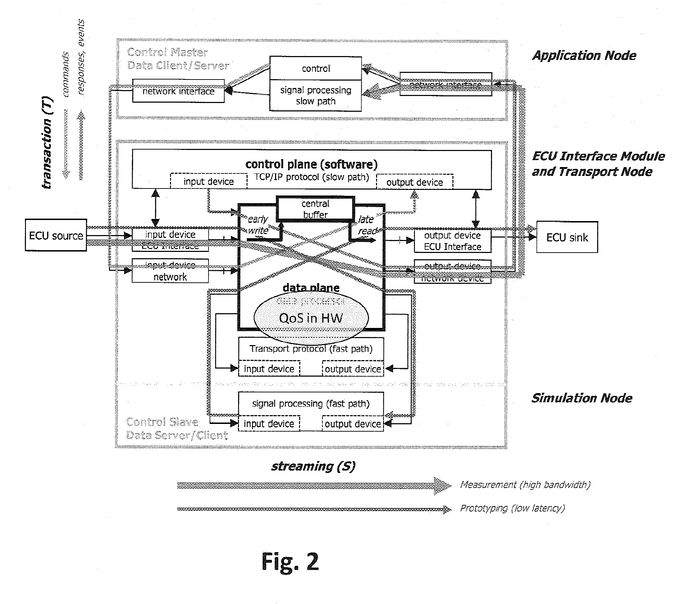

In contrast thereto, the present invention suggests a new technology which uses a different architectural view. According to the multi-service properties of automotive protocols, the architecture is split into a control plane implemented in software operating on configuration, calibration and diagnostics (CD) data transported using transactions (T) and a data plane implemented in hardware transporting measurement (M) and prototyping data (RP) stateless data streams (S). The respective control and data plane implementation view is shown in figure 2.

The transactions between master (client) and slave (server) can also be split into stateless data streams: a downlink stream carrying commands and an uplink stream carrying responses and events. With this transaction split in mind, the control plane appears to the data plane as an ordinary input device for uplink traffic and an ordinary output device for downlink traffic. The data plane switches these transaction streams to and from the devices (ECU sink, ECU source) responsible for the desired physical port. The transaction state itself which associates downlink and uplink streams is located in the control plane.

As shown in figure 2, stateful protocol layers, e.g. the transmission control protocol (TCP), are terminated in functional blocks that appear as satellite functions (ordinary devices) to the data plane core in the same way as the stateful automotive protocol transaction layers. The state of the protocol is located in the satellite function. The functional block in figure 2 designated "Transport Protocol (fast path)" is described in detail in another patent application (application number EP 12 188 660) filed by the same applicant. The content of that application is incorporated herein by reference. Stateless protocol layers, e.g. the user datagram protocol (UDP) are terminated inside the data plane and the network interface.

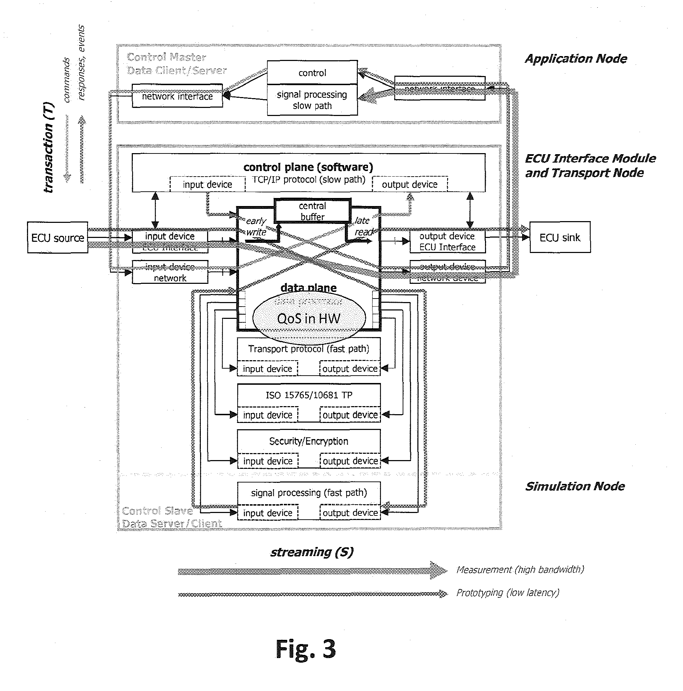

Another satellite function shown in figure 2 is a fast path signal processing function which contains the prototyping model and can be implemented either in hardware or software depending on the particular use case. Figure 3 shows a control and data plane implementation view of an MCD and prototyping system comprising examples for other satellite functions. These other satellite functions can comprise, for example, ISO Transport Protocol functions, security (encryption) functions and/or signal level gateway functions.

A major advantage of a common data plane is the fact that all incoming traffic can be observed which is essential to control quality of service (QoS) in respect or latency, jitter, throughput etc..

The separation of control plane and data plane suggested by the present invention enables optimized implementations. Further optimizations can be achieved by an ASIC development instead of an FPGA development.
● The data plane is completely implemented in hardware and is optimized for very fast event processing with event cycle times down to 200 ns (current software approach: > 50 µs).
● The data plane is completely implemented in hardware and is optimized for very low jitter of less than 2 µs (current software approach: tens of µs).
● The data plane is completely implemented in hardware and is optimized for a high data throughput of up to 5 Gbit/s (current software approach: < 100 Mbit/s).
● All three optimizations (event cycle times, jitter, data throughput) are possible within the same hardware without violating the power consumption limitation of embedded ECU interface devices.
● The control plane is implemented in software and is optimized for content aware, stateful transaction processing. Since software is unloaded from fast event processing in protocol layers, the available CPU performance can be more efficiently used.
● Stateful transport protocols like TCP or IP fragmentation are implemented in hardware (fast path) optimized for performance and - co-existing - in software (slow path) optimized for features (layer 7 protocols, number of connections).
● Signal processing may be located in a powerful external simulation node which is also freed from fine granular transport event processing and allowed to concentrate on its signal processing functions.

The data plane receives data carrying events from input devices, serializes these events very fast without any context switching overhead, performs a set of generalized processing steps and distributes data carrying events to the output devices.

Quality of service (QoS) aware queuing and scheduling of data events is only performed within the data plane which allows a much better control of traffic priority for transaction round trip times, latency, jitter and fairness for data throughput.

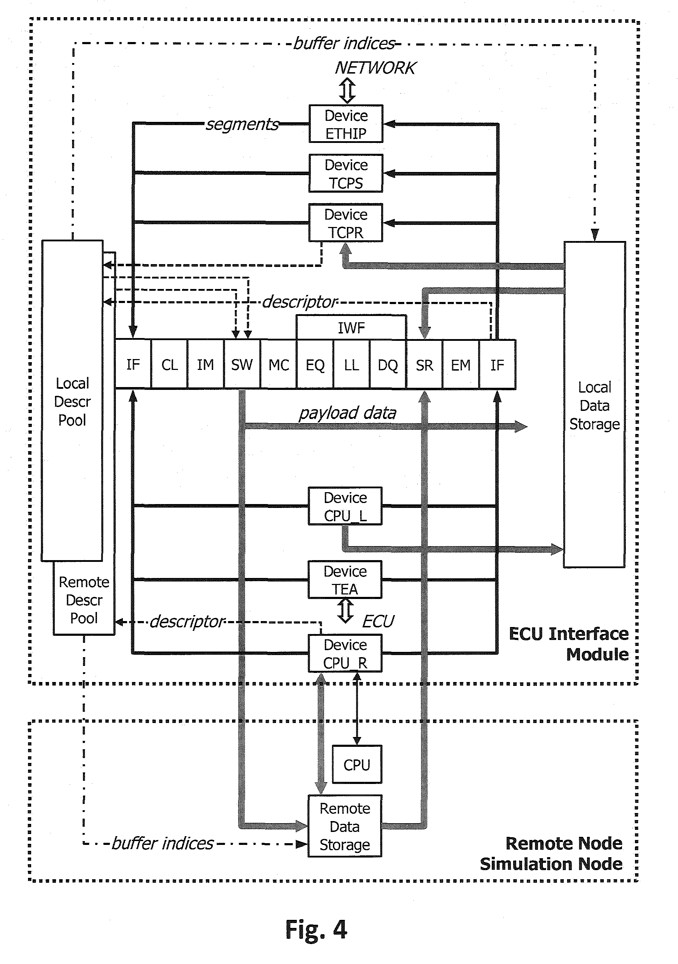

Devices operate and deliver events concurrently while the data plane core or data processor processes events sequentially following a strict pipelining approach with built-in cooperative hardware multithreading as shown in figure 4. According to the preferred embodiment shown in figure 4 the data plane consists of the following basic components:
Data Plane Devices
   Devices operate concurrently, encapsulate physical and link layer specific behavior or stateful protocol functions and provide serialization support to the data plane core pipeline.
Data Plane Core Pipeline = Data Processor
   Performs the actual event processing based on a generic information model: classification, re-assembly, queuing, hierarchical scheduling, segmentation and header modification.

The pipeline consists of a set of chained well defined processing stages (IF, CL, IM, SW, MC, EQ, LL, DQ, SR, EM, IF).
The data processor operates on descriptors (pointers) of data rather than the data itself, which saves logic gates and power.

### Descriptor Pools

Descriptor pools are repositories of indices to data buffers located in local or remote storage.

### Data Storage

There are two data storage types:
■ One Local data storage located within the ECU interface module and
■ one or more remote data storages located outside the ECU interface module and reachable via a PCI Express or any other suitable interface.

Devices deliver data in form of data segments of a fixed maximum size, e.g. 128 Byte. The size is determined by the bandwidth to and from the data storages. Multiple segments form a so-called data unit which corresponds to a protocol layer specific frame format, e.g. data transfer object for Universal Measurement and Calibration Protocol (XCP) layer, Ethernet frame for IEEE 802.1 link layer, CAN frame from the CAN bus or a Flexray frame.

Devices have knowledge about the segmentation and can mark the first and the last data segment of a data unit.

Data Segmentation is a pre-condition for a non-blocking date event processing in the data processor where events are serialized and where the processing is distributed among multiple pipeline stages.

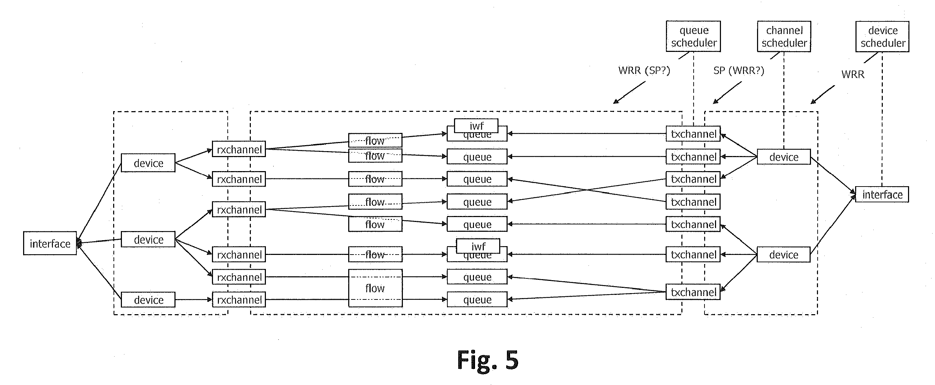

The data processor implementation is based on a generic information model, like the one shown in figure 5, which consists of the following entities and their attributes. The processing stages described below (data core pipeline architecture) are controlled using these attributes. Hence, the pipeline can be configured storing one or more of the following entities in registers, in order to map a specific application. Entities may be static (multiplicity defined by implementation) or dynamic (multiplicity defined by allocation from shared pools during configuration). The most important information model entities are listed below:

### Device (static)

Devices are concurrent working producers and consumers of data segments. Each data segment is associated with a device index, a channel index and first/last tag indicating whether the data segment is the first, an intermediate or the last data segment of a data unit.

### Receive Channel (rxchannel, dynamic)

A receive channel is an independent logical input data channel within the scope of a device. Devices may have multiple receive channels. Receive channels are used to re-assemble data units from timely interleaved data segments.

### Flow (dynamic)

A flow is the description of a data conversation with respect to a specific protocol layer. It is used to control data processing operations in the data processor, e.g. insertion of a protocol specific header into the outgoing payload data stream. Flows are attached to receive channels.

### Queue (dynamic)

Queues store descriptors of data. There are three basic types of queues: tail drop queues, triple buffers and priority lists. Tail drop queues are used to control quality of service (QoS), e.g. traffic priority and fairness. Triple buffers are used in prototyping real-time IO (RTIO) functions to provide the signal processing with a consistent sample of newest input data. Priority lists are used on bus systems with a strict priority based arbitration like the CAN bus. A secondary task of queues is to reassemble data units from incoming data segments.

### Transmit Priority Channel (static or dynamic)

The transmit priority channel represents an independent data channel in egress direction. Each transmit priority channel denotes a strict priority scheduling level within the scope of its associated output device. The transmit priority channel itself is associated with one or more queues, which are scheduled in a weighted round robin manner.

Transmit priority channels may schedule data segments (change scheduled queue after each segment) or data units (change scheduled queue once the running data unit has been completely scheduled). Transmit priority channels may change the segmentation granularity, by scheduling a data segment multiple times but with a lower byte count and providing an additional offset into a data buffer.

### Channel Interworking Function (dynamic)

The channel interworking function is an optional entity and is used to provide aggregation information between ingress and egress path for a traffic flow distributed among multiple sequential data segments.

### Scheduler (static)

The data processor implements a 3-stage hierarchical scheduling: 1) weighted round robin scheduling of devices, 2) strict priority scheduling of transmit priority channels within a device and 3) weighted round robin scheduling of queues within the scope of a transmit priority channel.

The data core pipeline consists of generic processing stages as described below. The data core pipeline architecture is shown in figure 4. The processing steps correspond to the generic information model described above (data processor implementation).

### Input Interface - IF

The input interface connects the devices to the data plane core and serializes concurrently incoming data events using a weighted round robin scheduling among connected devices.

Data associated with events can be passed "by value", which is the default or "by reference". In the latter case, the data processor assumes that the data payload associated with the event has already been stored and receives only the buffer index to the data payload. The example described below illustrates the handover by reference in the context of an XCP on TCP use case. This is also the subject of the other patent application (application number EP 12 188 660) filed by the same applicant. This application is incorporated herein by reference.

### Classifier - CL

The classifier uses the descriptor along with the first payload data to classify the data segment by building a key from the above information and producing a result vector which contains the following information: pool index, queue index, drop tag, flow id, interworking function index and others. This information is entered into the descriptor.

### Ingress Modifier- IM

The ingress modifier provides a means to modify (extend or reduce) the incoming data by either changing the data itself or by manipulating the descriptor.

### Segment Writer - SW

The segment writer allocates a descriptor from the pool as commanded by the pool classifier and writes payload data to its destination using the descriptor's buffer index.

### Multicast - MC

The multicast stage provides a means for distributing data towards multiple destinations. It maintains a multicast table, which is addressed by a multicast group identifier contained in the received descriptor and delivers a list of queues. The received descriptor is cloned within the multicast stage to be enqueued into multiple output queues. The descriptor receives a reference count in order to manage the buffer pool.

### Enqueue Engine - EQ

The enqueue engine performs all operations required to store the descriptor into the selected queue and to make the queue visible for the scheduler.

### Linked List Control - LL

The linked list control maintains linked lists of descriptors which represent data queues. It receives enqueue command from the enqueue engine and Dequeue commands from the scheduler or dequeue engine.

### Dequeue Engine - DQ

The dequeue engine is the scheduling execution unit. It determines the next queue to be serviced using the device's output FIFO status and configured priority information in form of transmit priority channels per output device. It is also capable to re-segment traffic by splitting a running data segment into smaller data segments or to maintain data unit consistency by scheduling all data segments of data unit before servicing another queue for the current transmit priority channel.

### Segment Reader-SR

The segment reader uses the buffer index contained in the descriptor to read data from local or remote data storage.

### Egress Modifier- EM

The egress modifier uses the flow id and other tags from the descriptor to modify the payload data stream according to its configuration, e.g. by adding or removing data to or from the data stream or by manipulating the descriptor content.

### Output Interface - OF

The output interface distributes data segments to those output devices that have announced their readiness to receive more data (output FIFO not full). Devices are serviced using a weighted round robin algorithm with weights proportional to the desired line rate.

### Local Pool - LP

The local pool contains software-prepared indices to buffers in the local data storage. Those buffer indices are the core attribute of descriptors.

### Remote Pool - RP

The remote pool contains software-prepared indices to buffers in the remote data storage. There may be multiple remote pools for multiple remote data storages.

The interfaces between the pipeline and the devices ETHIP, TCPS, TCPR, CPU_L, TEA are the same regarding their syntax but are protocol-specific regarding their semantic.

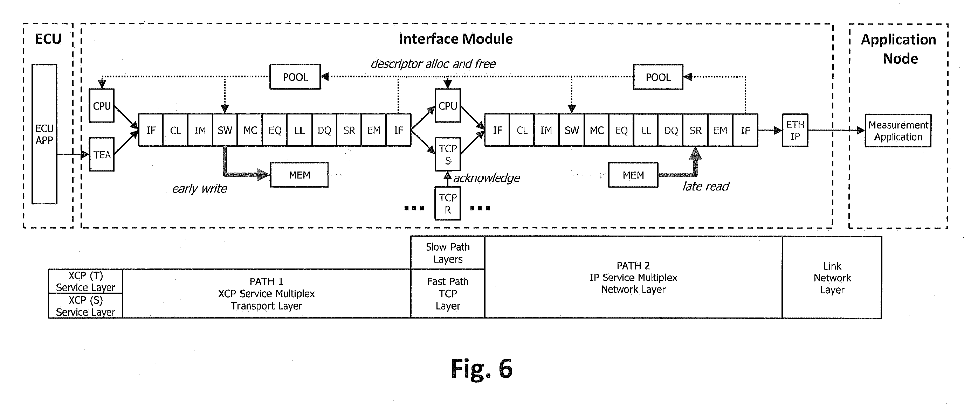

In the following two embodiments of the present invention are described on an exemplary basis. The first embodiment shown in figure 6 refers to a dual path Transparent ECU Access (TEA) based ECU measurement using XCP on TCP (uplink). This embodiment uses a TEA device facing the ECU. The TEA device terminates the XCP streaming service layer (S) and delivers XCP standard data transfer objects (DTO) containing time stamped measurement data. The local CPU terminates the XCP protocol transaction service layer (T) and delivers standard XCP control transfer objects (CTO).

In PATH 1 the data processor multiplexes CTOs and DTOs and terminates the XCP protocol's transport layer containing the XCP packet counter which is common for CTOs and DTOs.

The stateful TCP protocol layer is terminated in the TCP sender (TCPS) device which co-operates with the TCP receiver (TCPR) device which delivers acknowledgements to the TCP sender.

In PATH 2 the data processor multiplexes TCP segments and Ethernet frames from the local CPU's software stack towards the common IP network and Ethernet link layer.

The ETHIP device finally terminates the IP network layer and the Ethernet link layer.

It is noted that the downlink TCP conversation co-exists with the uplink conversation and passes the data processor also twice. Hence, for a full XCPonTCP session there are four co-existing paths inside the data processing pipeline.

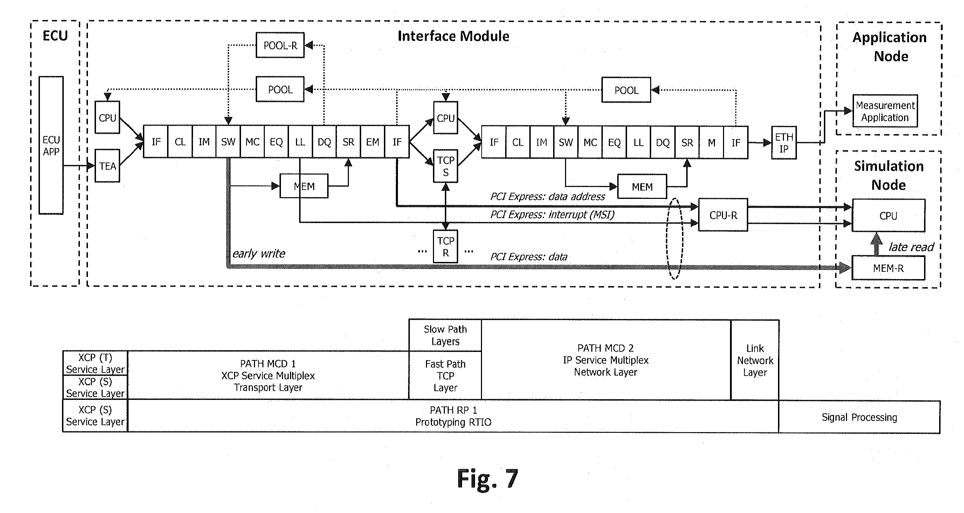

The second embodiment shown in figure 7 refers to a single path TEA (ETK) based real-time IO (RTIO) for an external simulation node. This embodiment adds a low latency prototyping RTIO path to the previous scenario of the first embodiment. The RTIO termination happens during PATH 1 inside the data processor. PATH 2 is not used for RTIO.

The TEA device delivers DTOs using a dedicated receive channel for the RTIO. Since the signal processing unit (simulation node) is a remote instance (device CPU-R), the data processor allocates descriptors from the remote pool carrying buffer indices into the remote data storage of the simulation node and pushes data early into the remote memory.

The data processor queue operates as triple buffer which re-assembles signal groups from data transfer objects split into data segments. Once a signal group sample is complete, an interrupt is asserted to the simulation node which then reads address information from the triple buffer. The corresponding data has already arrived and may even be already available in the simulation node's cache memory.

An exemplary selection of some of the key features and key ideas of the present invention and of some of the advantages associated therewith are listed hereinafter:
● orthogonal views on data and control
   o data flow view on data plane and client sever view on control plane
   o control plane is ordinary client of data plane
   o data plane provides QoS for control plane
● device generalization
   o generalized device interface to data processor
   o encapsulation of device specific functionality
   o physical devices
      ■ encapsulate link layer specific controllers
      ■ examples: CAN, FlexRay, Ethernet, TEA (ETK)
   o software devices
      ■ encapsulates software functions
      ■ examples: local CPU (local software), remote CPU (remote software)
   o protocol devices
      ■ encapsulates stateful protocol functions
      ■ example: TCP
   o signal processing devices
      ■ encapsulates signal processing instances
      ■ example: CPU module, External PC, hardware based signal processing entities
● multipurpose queuing
   o satisfy multiple requirements with same hardware
      ■ tail drop queues for high throughput measurement and control plane
      ■ head drop buffers (triple buffers) for low latency prototyping
      ■ quality of service (QoS)
      ■ data unit re-assembly
● multipath operation
   o enable multi-layer operation on same hardware
   o client layer tunneling using descriptor extensions
   o Example: XCPonEthernet; path 1: XCP; path 2: IP/Ethernet
● data processing based on descriptors
   o minimize number memory accesses
   o reduce logic toggle rate and power consumption
   o reduce interface toggle rate
      ■ interface modes "by value" and "by reference" (long description only)
● data segmentation
   o maximize input event rate (serialization rate)
   o reduce device buffer sizes
   o minimize jitter and latency
● pipeline architecture
   o eliminate context switching overhead
   o increase determinism
   o simplify implementation by co-operative multitasking
● generalized data storage handling
   o local pool and remote pool
   o local memory and remote memory
● generic information model
   o reduce effort and amount of logic by controlling logic and algorithm re-use
   o protocol implementation by configuration rather than implementation
● queue based multicast
   o multi-client support
● spatial multicast for ECU interfaces
   o logical separation of conversation with contrary QoS requirements
● 3 stage hierarchical scheduling
   o guarantee low latency via strict priority scheduling
   o guarantee fairness via weighted round robin scheduling

## Claims

1. Method for data transmission among electronic control units, referred to hereinafter as ECUs, and/or measuring devices in the realm of motor vehicles, **characterized in that** the architecture of the data transmission is split up into a control plane implemented in software operating on configuration, calibration and/or diagnostics, referred to hereinafter as CD, data and a data plane implemented in hardware transporting measurement, referred to hereinafter as M, data and/or prototyping, referred to hereinafter as RP, data.

2. Method according to claim 1, **characterized in that** the CD data is transported using transactions, referred to hereinafter as T.

3. Method according to claim 1 or 2, **characterized in that** the M data and/or the RP data is transported in stateless data streams, referred to hereinafter as S.

4. Method according to one of the preceding claims, **characterized in that** the data plane switches the commands and responses of transactions and/or the streams to and from the ECUs and/or the measuring devices.

5. Method according to one of the preceding claims, **characterized in that** the method is executed within a distributed measurement, calibration and diagnostics, referred to hereinafter as MCD, system.

6. Method according to one of the preceding claims, **characterized in that** the method is adapted for monitoring and/or controlling operation of ECUs within a motor vehicle.

7. Method according to one of the preceding claims, **characterized in that** the method is adapted for monitoring and/or controlling the data transmission among ECUs within a motor vehicle.

8. Electronic control unit, referred to hereinafter as ECU, interface module for controlling data transmission among ECUs and/or measuring devices in the realm of motor vehicles, **characterized in that** the ECU interface comprises means for realizing a method according to any one of the preceding claims.

9. Measuring device for monitoring and/or controlling operation of an electronic control unit (ECU) of a motor vehicle, **characterized in that** the device comprises an ECU interface module according to claim 8.

10. Electronic control unit (ECU) adapted for connection to a measuring device for monitoring and/or controlling operation of an electronic control unit (ECU) of a motor vehicle or to another ECU, **characterized in that** the ECU comprises an ECU interface module according to claim 8.
